# EUROPÄISCHE PATENTSCHRIFT

(11) **EP 1 205 023 B1**
(45) Veröffentlichungstag und Bekanntmachung des Hinweises auf die Patenterteilung: **17.09.2003**
(21) Anmeldenummer: 00956247.1
(22) Anmeldetag: 21.07.2000
(51) Int. Cl.: H02P 7/00

(54) **ALS ELEKTRO-AKUSTISCHER WANDLER ANGESTEUERTER ELEKTROMOTOR**
ELECTRIC MOTOR CONTROLLED BY AN ELECTRO-ACOUSTIC CONVERTER
MOTEUR ELECTRIQUE COMMANDE EN TANT QUE CONVERTISSEUR ELECTRO-ACOUSTIQUE

(30) Priorität: 14.08.1999 DE 19938670
(43) Veröffentlichungstag der Anmeldung: 15.05.2002
(73) Patentinhaber: Braun GmbH, 61476 Kronberg (DE)
(72) Erfinder: JUNG, Philipp, 64347 Griesheim (DE); TRAWINSKI, Peter, 64331 Weiterstadt (DE)
(86) Internationale Anmeldenummer: EP0007014
(87) Internationale Veröffentlichungsnummer: WO01013510

(56) Entgegenhaltungen:
- EP-A- 0 352 397
- EP-A- 0 360 210
- DE-A- 2 830 527
- PATENT ABSTRACTS OF JAPAN vol. 016, no. 488 (E-1277), 9. Oktober 1992 (1992-10-09) -& JP 04 178200 A (RICOH CO LTD), 25. Juni 1992 (1992-06-25)

## Beschreibung

Die Erfindung betrifft ein Gerät des persönlichen Bedarfs, wie Zahnbürste, Munddusche, Rasierer, Küchenmaschine, mit einem als Elektromotor ausgebildeten Antriebsmittel und mit einer Steuer-/Regelstufe zur Energieversorgung des Elektromotors nach dem Oberbegriff des Anspruchs 1.

Derartige Geräte sind vielfach gebräuchlich, so handelt es sich beispielsweise bei den bekannten Geräten um Geräte des persönlichen Bedarfs, wie beispielsweise elektrische Zahnbürsten, elektrische Mundduschen, elektrische Rasierer, elektrische Haushalts- und Küchenmaschinen oder dergleichen. Weiterhin sind solche Geräte auch als Bürokommunikationsgeräte, als elektrisch betriebene Spielzeuge oder dergleichen bekannt. Die Anwendung der vorläufigen Erfindung ist jedoch nicht auf die genannten Geräte beschränkt, sondern im Prinzip bei jedem Gerät, welches einen Elektromotor aufweist, einsetzbar. In vielen Fällen besteht Bedarf, daß den Benutzern der Geräte eine Information übermittelt werden soll. Häufig finden zur Informationsübermittlung separate, in dem Gerät eingebaute Schallgeber, Lichtgeber oder sonstige Informationsgeber Anwendung, so sind z. B. bereits Zahnbürsten bekannt geworden, die eine Art Lautsprecher als Informationsgeber besitzen und mit denen der Benutzer beispielsweise über den Ablauf der Putzzeitdauer oder dergleichen Zeitintervalle informiert werden kann. Diese Schallgeber können als dynamische, elektrostatische, magnetostatische oder Piezo-Lautsprecher ausgebildet sein. Den bekannten Geräten liegt jedoch der Nachteil zugrunde, daß für eine akustische Informationsübermittlung ein zusätzlicher Schallgeber erforderlich ist, der nicht nur die Herstellungskosten des Gerätes erhöht, sondern auch einigen Raum in den Geräten beansprucht. Weiterhin besteht das Problem, insbesondere bei hermetisch gekapselten Geräten, wie beispielsweise Geräten mit wasserdichtem Gehäuse, Maßnahmen zu treffen, um die im Inneren des Gerätes erzeugten Schallwellen dem Benutzer zugänglich zu machen.

Ein Gerät mit den eingangs genannten Merkmalen ist beispielsweise aus der EP 0 352 397 A1 bekannt. Im einzelnen ist eine Vorrichtung zum Regeln der Geschwindigkeit von pulsbreitenmodulierten Elektromotoren vorgesehen, die auf einer Welle einen Kodierer aufweist, dessen Signale als Rückmeldesignale in einem Regelkreis dienen und einem Regler mit Mikroprozessor zugeführt werden. Des weiteren ist ein in der Steuerlogik befindliches Toggle-Flip-Flop vorgesehen, welches den Gleichstrommotor mit einer reversierenden Bestromung ansteuert, deren Frequenz im hörbaren Bereich liegt, so daß der Gleichstrommotor als akustischer Signalgeber arbeitet. Hierbei befindet sich der Gleichstrommotor nicht in Bewegung. Die Frequenz wird über die Software eingestellt und demzufolge können gewünschte Tonfolgen mit minimalem Mehraufwand erzeugt werden. Der Gleichstrommotor wird mit bipolaren Signalen zur Tonerzeugung angesteuert.

Aus dem Abstract zur JP-04178200 ist ein Schrittmotor bekannt, der bei Fehlererkennung bezüglich der Ansteuerung umgeschaltet wird und ein hörbares Frequenzsignal abgibt. Die EP 0 360 210 A2 offenbart einen Wechselstrommotor, der mit pulsweitenmodulierten Signalen beaufschlagt wird. In der DE 28 30 527 A1 ist eine Büromaschine mit mindestens einem, elektrische Impulse in eine mechanische Bewegung umsetzenden Wandler bekannt, wobei zur Abgabe eines akustischen Signals der bewegliche Teil des Wandlers dadurch in Vibration versetzbar ist, daß der Wandler durch einen Impulsgenerator ansteuerbar ist, der eine Frequenz oberhalb der maximalen Betriebsfrequenz erzeugt.

Der Erfindung liegt demgegenüber die Aufgabe zugrunde, ein Gerät nach dem Oberbegriff des Anspruchs 1 dahingehend weiterzubilden, daß eine einfache schaltungstechnische Realisierung von für den Benutzer wahrnehmbaren, bevorzugt akustischen Signalen ermöglicht ist.

Diese Aufgabe wird nach der Erfindung bei dem Gerät mit den eingangs genannten Merkmalen dadurch gelöst, daß die Steuer-/Regelstufe dem Gleichstrommotor während dessen Stillstandszeiten unipolare Signale zuführt und daß der zeitliche Mittelwert des Signals unterhalb eines Signalschwellenwertes liegt, der zu einem Anlaufen des Gleichstrommotors führt.

Der erfindungsgemäße Einsatz eines im Stillstand befindlichen, elektrischen Motors als Schallgeber bzw. elektro-akustischer Wandler erspart zusätzliche, separate Komponenten, wie Lautsprecher oder dergleichen, da der ohnehin für Antriebszwecke vorhandene Elektromotor durch entsprechende Ansteuerung mittels der Steuer-/Regelstufe während der Stillstandszeiten als elektro-akustischer Wandler betrieben werden kann. Des weiteren ist der in dem Gerät eingesetzte Elektromotor ohnehin mechanisch mit dem Gerät bzw. dem Gerätegehäuse verbunden, so daß über diese Ankopplung des Motors an das Gerät bzw. Gerätegehäuse Schall aus dem Geräteinneren über das Gerät bzw. Gerätegehäuse ohne weiteres an die Umgebung bzw. für den Benutzer gut wahrnehmbar abgegeben werden kann. Während der Stillstandszeiten des Elektromotors, in denen von dem Elektromotor mechanische Antriebsenergie nicht abgerufen wird, wird der Elektromotor mit geeigneter Ansteuerung als Schallgeber bzw als Lautsprecher betrieben. Dabei ist das analoge Signal ein unipolares Signal, wobei sich die Ausbildung der elektronischen Komponenten wie auch die Energieversorgung, beispielsweise mittels eines Akkumulators oder dergleichen, äußerst einfach gestaltet. Von besonderer Bedeutung für die Ausgestaltungen der Erfindung ist es, daß der zeitliche Mittelwert des Signals unterhalb eines Signalschwellwertes liegt, der zu einem Anlaufen des Elektromotors führt.

Nach einer Ausführungsvariante der Erfindung führt die Steuer-/Regelstufe dem Gleichstrommotor analoge Signale zu.

Dabei enthält das analoge Signal, beispielsweise ein Spannungssignal, das Spektrum der vom Gleichstrommotor abzugebenden akustischen Signale.

Weiterhin kann das analoge Signal auch Frequenzgemische, beispielsweise zur Erzeugung von akustischen Sprach- oder Musiksignalen enthalten.

Nach einer anderen Ausführungsform der Erfindung besteht jedoch auch die Möglichkeit, daß die Steuer-/Regelstufe dem Elektromotor digitale Signale zuführt.

Dabei sind die digitalen Signale insbesondere als pulsweitenmodulierte Signale ausgebildet und weisen insbesondere eine im wesentlichen konstante Maximalamplitude auf.

Die Grundfrequenz des digitalen Signals repräsentiert im wesentlichen die Tonhöhe des akustischen Signals unter Vernachlässigung der Obertöne.

Dabei hat es sich gezeigt, daß der Signalschwellwert in Abhängigkeit der Signalfrequenz variiert und insbesondere mit der Frequenz ansteigt. Aufgrund dieser Gegebenheit ist es möglich, den Gleichstrommotor bei höheren Frequenzen mit höheren Signalamplituden anzusteuern, so daß sich eine verbesserte Schall-Leistung ergibt.

Weiterhin ist von Vorteil der Tatsache Rechnung zu tragen, daß das Signal Frequenzen, die unterhalb eines Frequenzschwellwertes liegen, der zu einem Anlaufen des Gleichshrommotors führt, nicht aufweist.

Nach einer anderen vorteilhaften Weiterbildung der Erfindung ist zwischen der Abschaltung des Gleichstrommotors als Antriebsmittel und dem Betrieb als elektro-akustischer Wandler eine Zeitverzögerung vorzusehen.

Von Vorteil weist der Gleichstrommotor eine Bremse, beispielsweise eine mechanische Bremse mit konstantem Bremsmoment, oder eine Anlaufbremse mit nach Anlauf des Motors abfallenden Bremsmoment auf.

In verschiedenen Anwendungsfällen erweist es sich ebenfalls als vorteilhaft, daß der Gleichstrommotor eine Vorrichtung zur Positionierung des Rotors in einer definierten Ruhelage aufweist.

Zur Optimierung des Wirkungsgrades im Hinblick auf die abgegebene Schall-Leistung weist der Gleichstrommotor nach einer anderen Ausführungsform der Erfindung ein entsprechend angepaßtes Motorgehäuse oder Motorgehäusematerial auf.

Bevorzugt sind zwischen Gerät bzw. Gerätegehäuse und Gleichstrommotor mechanische Mittel, beispielsweise Rippen, Hartteile oder dergleichen vorgesehen, die für eine Optimierung der akustischen Abstrahlung des Gerätes bzw. Gerätegehäuses sorgen.

Die Steuer-/Regelstufe wird bevorzugt durch eine Treiberstufe gebildet, die einerseits mit der Energieversorgung und andererseits mit einem Signalgenerator sowie gegebenenfalls zusätzlichen Elektronikbauteilen verbunden ist.

Das erfindungsgemäße Gerät dient bevorzugt als Antrieb beispielsweise für eine Zahnbürste, eine Munddusche, ein Schersystem, eine Haushaltsmaschine, eine Büromaschine oder dergleichen.

Weitere Vorteile, Merkmale, Anwendungsmöglichen und Ausgestaltungen der Erfindung ergeben sich aus der Beschreibung der nachfolgenden Ausführungsbeispiele.

Es zeigen:
- Fig. 1: ein erstes Ausführungsbeispiel eines erfindungsgemäßen Gerätes in schematischer Darstellung als Blockdiagramm,
- Fig. 2: ein Ausführungsbeispiel der Ansteuerung mit unipolaren analogen Signalen einer Frequenz von 1 kHz und 0,66 kHz,
- Fig. 3: ein Ausführungsbeispiel der Ansteuerung mit pulsweitenmodulierten digitalen Signalen einer Grundfrequenz von 1 kHz und 0,66 kHz und
- Fig. 4: ein Ausführungsbeispiel des frequenzabhängigen Anstieges des Signalschwellwertes.

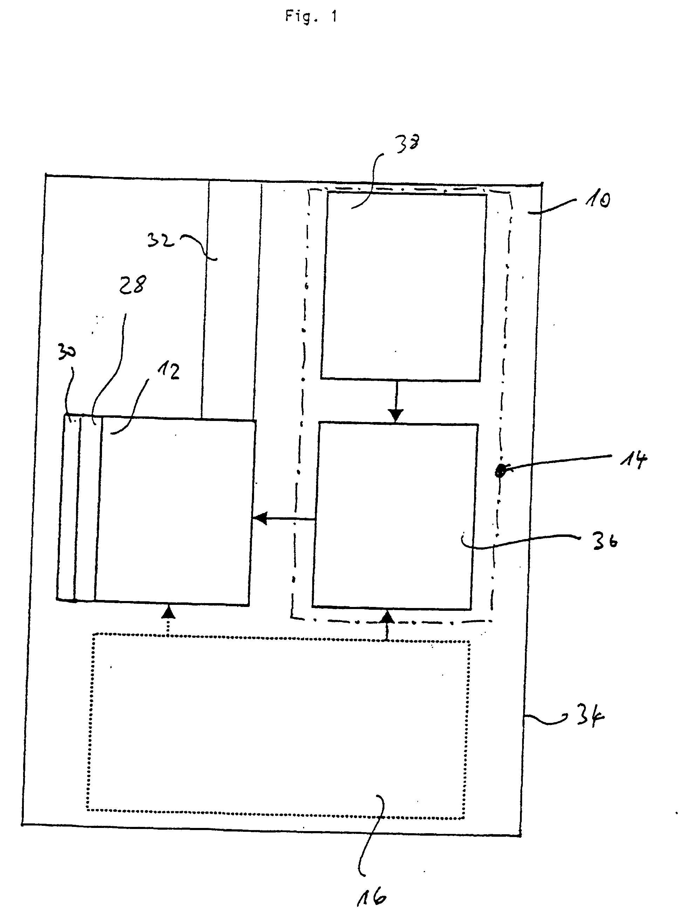

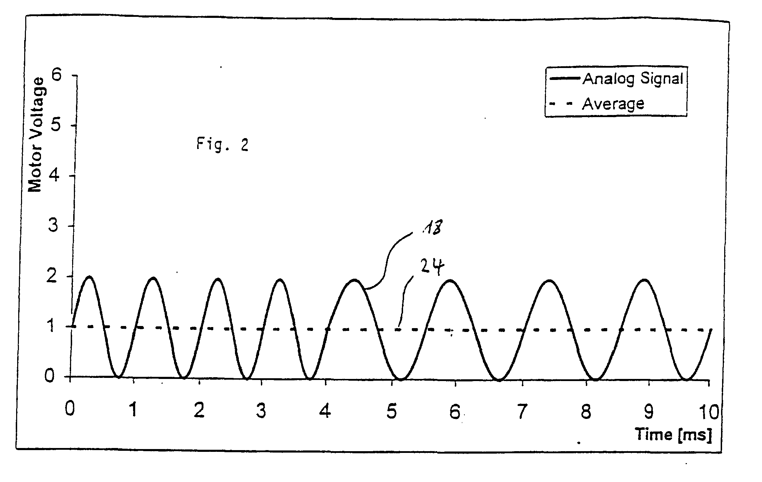

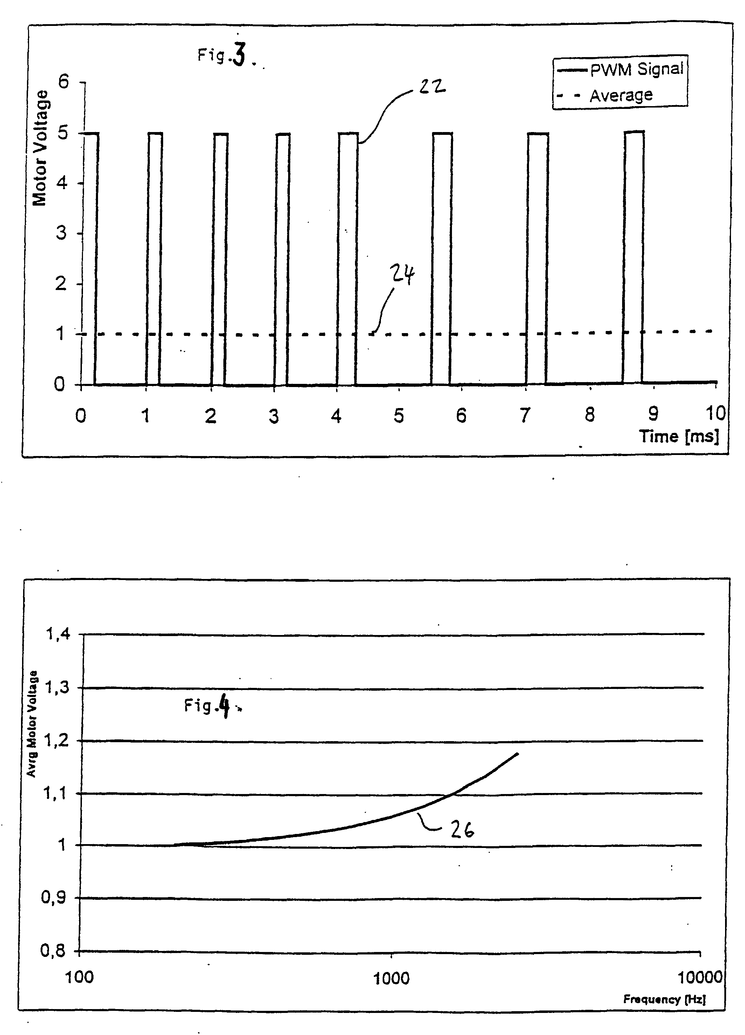

In Fig. 1 ist ein Gerät 10 mit einem als Elektromotor 12 ausgebildeten Antriebsmittel und mit einer Steuer-/Regelstufe 14 zur Energieversorgung 16 des Elektromotors 12 dargestellt. Die Steuer-/Regelstufe 14 versorgt während Stillstandszeiten des Elektromotors 12 diesen mit einer solchen, insbesondere hinsichtlich Zeitdauer und/oder Amplitude angepaßten Energie, so daß der Elektromotor 12 im Stillstand als elektro-akustischer Wandler zumindest teilweise diese Energie in Form akustischer Signale abgibt. Der Elektromotor 12 ist als Gleichstrommotor ausgebildet. Die steuer-/Regelstufe 14 ist durch eine Treiberstufe 36 gebildet, die einerseits mit der Energieversorgung 16 und andererseits mit einem Signalgenerator 38 sowie gegebenenfalls zusätzlichen Elektronikbauteilen verbunden ist. Wird der Elektromotor 12 für Antriebszwecke benötigt, sorgt die Steuer-/Regelstufe 14 für eine entsprechende Energieversorgung des Elektromotors 12, so daß dieser in Bewegung versetzt wird und beispielsweise mechanische Antriebsenergie abgibt.

Gemäß dem Ausführungsbeispiel der Fig. 2 wird der Elektromotor 12 mit unipolaren Signalen 18 angesteuert, die eine Frequenz von ca. 1 kHz bzw. 0,66 kHz aufweisen.

In Fig. 3 ist eine Ansteuerung des Elektromotors 12 mit pulsweitenmodulierten Signalen 22 dargestellt, wobei die Grundfrequenz dieser Signale wiederum bei etwa 1 kHz bzw. 0,66 kHz liegen.

Bei sämtlichen Ausführungsbeispielen der Fig. 2, 3 liegt der zeitliche Mittelwert 24 der Signale 18, 22 unterhalb eines Signalschwellwertes 26, der zu einem Anlaufen des Elektromotors 12 führt.

In Fig. 4 ist für ein spezielles Ausführungsbeispiel einer Elektrozahnbürste mit einem Kleinleistungs-Gleichstrommotor der Signalschwellwert 26 in Abhängigkeit der Signalfrequenz aufgetragen. Erkennbar steigt dieser Signalschwellwert 26 mit wachsenden Frequenzen an. Es versteht sich, daß die Frequenzabhängigkeit des Signalschwellwertes 26 je nach Anwendungsfall sehr unterschiedlich ausgeprägt ist.

Im weiteren sollen eine Reihe von Vorteilen, Anwendungsmöglichkeiten und Ausgestaltungen näher beschrieben werden:

Die Erfindung zeichnet sich insgesamt durch eine neuartige Anwendung eines Gleichstrommotors 12, insbesondere eines Kleinleistungsmotors, aus, in dem dieser Elektromotor 12 durch eine besondere Ansteuerung im Stillstand als elektro-akustischer Wandler benutzt wird. Dabei wird ein stillstehender Elektromotor über eine geeignete elektronische Steuer-/Regelstufe 14 derart mit Energie versorgt, daß der Elektromotor 12 nicht oder gerade nicht anläuft, die Energie im zeitlichen Verlauf jedoch derart aufbereitet ist, daß zumindest ein Teil dieser Energie von dem Elektromotor 12 in akustischer Form abgestrahlt wird. Mit steigendem Effektivwert der an den Elektromotor abgegebenen Energie erhöht sich auch die abgegebene Schall-Leistung. Eine solche Motoransteuerung kann entweder durch ein geeignetes analoges unipolares Spannungssignal oder auch durch ein pulsweitenmoduliertes Signal mit im wesentlichen konstanter Spannung über beispielsweise eine Treiberstufe 36, wie einen Transistor oder dergleichen, erfolgen.

Das analoge Signal 18 enthält dabei das Spektrum des gewünschten akustischen Sig-nals, während bei dem pulsweitenmodulierten Signal 22 die Grundfrequenz bzw. Pulswiederholfrequenz der Ansteuerung die Tonhöhe des akustischen Signals repräsentiert. Bei analoger Ansteuerung können im Prinzip beliebige Frequenzgemische, wie z. B. Sprachfrequenzen, Musikfrequenzen oder dergleichen, erzeugt werden, während die pulsweitenmodulierte Ansteuerung unter Umständen nur eingeschränkt die Überlagerung diskreter Frequenzen erlaubt.

Ein unipolares Signal 18 darf in Bezug auf den zeitlichen Mittelwert 24 nicht einen Signalschwellwert 26, der zum Anlaufen des Elektromotors 12 führt, überschreiten. Bei Einsatz eines pulsweitenmodulierten Signals 22 ist das Tastverhältnis entsprechend zu wählen, so daß ein Anlaufen des Elektromotors 12 verhindert wird. Da das Anlaufverhalten des Elektromotors 12 frequenzabhängig ist, ist der entsprechende Signalwert entweder auf den ungünstigsten Fall einzustellen oder beispielsweise frequenzabhängig für ein besonderes Ausführungsbeispiel entsprechend dem Frequenzgang des Signalschwellwertes 26 beispielsweise der Fig. 5 anzupassen.

Die Haftreibung des mechanischen Systems Elektromotor 12 im Stillstand ist immer größer als die Reibung, während der Elektromotor zum Antrieb des angekoppelten Systems eingeschaltet ist. Will man eine maximale Aussteuerbarkeit erreichen, ist bei einem Wechsel von dem "motorischen" zu dem "akustischen" Betrieb des Elektromotors 12 durch geeignete Maßnahmen dafür Sorge zu tragen, daß der Elektromotor 12 sicher zum Stillstand kommt und sich damit die Haftreibungsverhältnisse einstellen. Dies kann z. B. durch eine geeignete Zeitverzögerung gewährleistet werden, die zwischen dem Abschalten des Motors als Antriebsmittel und seiner Ansteuerung als akustischer Geber eingeschaltet wird.

Insoweit ist bei allen Ansteuerarten des Elektromotors 12 im "akustischen" Betrieb darauf zu achten, daß die analogen bzw. digitalen Signale solche Frequenzen, die unterhalb eines Frequenzschwellwertes liegen, der zu einem Anlaufen des Elektromotors 12 führt, nicht aufweisen. In der Praxis bietet es sich daher an, daß die untersten Frequenzen der analogen bzw. digitalen Signale 18, 22 nicht tiefer als ca. 50 Hz oder ca. 100 Hz liegen. Die unterste Frequenz wird auch durch die träge Masse des Rotors bestimmt und kann somit in Abhängigkeit des Typs des eingesetzten Elektromotors 12 variieren. Je kleiner die träge Masse des Rotors ist, umso höher ist die untere Grenzfrequenz.

Ein unerwünschtes Anlaufen des Motors kommt immer dann zustande, wenn das mittlere, durch die Ansteuerung aufgebrachte Moment das Anlaufmoment des Gerätes 10, also Motor plus angekoppelte mechanische Systeme, überschreitet. Sollte im speziellen Anwendungsfall die maximal zu erzielende Lautstärke nicht ausreichend sein, kann durch geeignete mechanische Maßnahmen das Anlaufmoment des Elektromotors 12 erhöht werden. Insoweit kann beispielsweise der Elektromotor 12 mit einer Bremse 28, beispielsweise einer mechanischen Bremse mit konstantem Bremsmoment oder auch einer Anlaufbremse mit nach Anlauf des Motors abfallenden Bremsmoment, zum Einsatz kommen.

Da die Elektromotoren 12 in Bezug auf die Wicklungen und die magnetisch wirksamen Komponenten in der Regel nicht völlig rotationssymmetrisch aufgebaut sind, kann die Art und Amplitude der entstehenden Kräfte aufgrund der Signale 18, 22 und damit auch die Amplitude und die Klangfarbe der von dem im Stillstand befindlichen Elektromotor 12 abgegebenen akustischen Signale insbesondere auch von der Winkelposition des Rotors in Bezug auf den Stator abhängen. Um hierfür eine gewisse Reproduzierbarkeit zu gewährleisten, kann durch geeignete Maßnahmen dafür gesorgt werden, daß der Motor immer bei einer definierten Rotorposition in Bezug auf den Stator zur Ruhe kommt. insoweit kann beispielsweise eine Vorrichtung 30 zur definierten Positionierung des Rotors in der Ruhelage vorgesehen sein.

Um den Wirkungsgrad und damit die maximal abgebbare Schall-Leistung zu erhöhen, kann der Elektromotor 12 selbst durch entsprechende Maßnahmen, wie z. B. ein angepaßtes Motorgehäuse oder Motorgehäusematerial für die Abstrahlung der akustischen Signal optimiert werden.

Weiterhin ist es möglich, durch geeignete Mittel 32, wie beispielsweise Rippen, Hartteile oder dergleichen, die akustische Kopplung zwischen dem Gerät 10 bzw. dem Gerätegehäuse 34 und dem Elektromotor 12 bzw. dem Motorgehäuse zu optimieren.

Die Wirkungsweise der erfindungsgemäßen Ansteuerung ist nicht in sämtlichen Details bis ins letzte analysiert, läßt sich jedoch anhand von Plausibilitätsüberlegungen wie folgt beschreiben:

Die aufgrund der Ansteuerung mit den Signalen 18, 22 während des Stillstands des Elektromotors 12 in den antreibenden Wicklungen des Motors fließenden modulierten Ströme erzeugen mit dem akustischen Nutzsignal modulierte Magnetfelder. Diese erzeugen auf verschiedene Weise, beispielsweise über magnetische Anziehungskräfte stromdurchflossener Leiter, ferromagnetische Werkstoffe, Magnetostriktion und dergleichen radiale, tangentiale und gegebenenfalls auch axiale Kräfte auf Rotor und Gehäuse und führen damit zu Verformungen bzw. Bewegungen in entsprechenden Lagern. Beispielsweise über diese Lager oder sonstige Ankopplungspositionen können die erzeugten, auf den Rotor einwirkenden Kräfte an das Motorgehäuse bzw. das Gerät 10 bzw. Gerätegehäuse 34 abgegeben werden. Das Gerätegehäuse 34 kann, an seiner Oberfläche schwingend wie ein Lautsprecher, diese Bewegungen akustisch direkt an die umgebende Luft, oder als Körperschall an andere Strukturen weitergeben, die das Signal dann im allgemeinen verstärkt an die Luft abgeben nach dem Prinzip eines Klangkörpers. Die Geometrie des Elektromotors 12 selbst sowie die der angekoppelten Komponenten, wie z. B. Gerätegehäuse 34 oder dergleichen, bewirken durch ihre Eigenresonanzen eine Filterwirkung auf das Spektrum des Signals und führen damit im allgemeinen zu einem eingeschränkten Frequenzband in Form eines Bandpasses, in dem akustische Signale sinnvoll von dem Gerät 10 abgestrahlt werden können.

In einem konkreten Ausführungsbeispiel, bei dem das Gerät 10 als Handstück einer Elektrozahnbürste ausgebildet ist, auf die eine durch den Elektromotor 12 antreibbare Zahnbürste aufsteckbar ist, wird der als DC-Kleinleistungsmotor ausgebildete Elektromotor 12 in bestimmten Betriebszuständen zur Ausgabe verschiedener Melodien eingesetzt. Derartige herkömmliche Zahnbürsten sind beispielsweise in der EP 0 850 027 A1 beschrieben, die durch ausdrücklichen Rückbezug in den Offenbarungsgehalt vorliegender Anmeldung mit einbezogen wird.

Akustische Ausmessungen an diesem individuellen Gerät 10 führen zu einem Nutzspektrum im Bereich von ca. 200 Hz bis ca. 2,5 kHz, da der Amplitudenabfall des akustischen Nutzsignals in diesem Frequenzbereich innerhalb sinnvoller Grenzen bleibt und das Nutzsignal von dem Benutzer gut hörbar ist. Die Figur 2 zeigt die Ansteuerung der Treiberstufe 36 mittels analoger unipolarer Signale 18. In Fig. 3 ist hingegen die Ansteuerung mittels pulsweitenmodulierter Signale 22 wiedergegeben. Bei Ansteuerung mit pulsweitenmodulierten Signalen 22 einer Amplitude, die der Nennmotorspannung entspricht, ergeben sich Tastverhältnisse bis zu ca. 20 %, bei denen der Elektromotor 12 sicher noch nicht anläuft. Aus Fig. 4 ist der frequenzabhängige Anstieg des Signalschwellwertes 26 ersichtlich, der im genannten Frequenzbereich von ca. 18 % bei etwa 200 Hz auf ca. 23 % bis 24 % bei ca. 2500 Hz ansteigt.

Das erfindungsgemäß Gerät 10 erspart den Einsatz eines Schallgebers, da der Elektromotor 12, der an und für sich für den Betrieb von Gerätekomponenten zur Verfügung steht, durch eine spezielle Ansteuerung während des Stillstandes selbst als Schallgeber benutzt wird. Dabei wird unter anderem auch die Ankopplung des Elektromotors 12 an das Gerätegehäuse 34 ausgenutzt, um den Schall aus dem Inneren des Gerätegehäuses 34 ohne Vorsehen oder Vorhandensein von Durchbrüchen oder dergleichen an die Umgebung abgeben zu können.

### Bezugszeichenliste

- 10: Gerät
- 12: Elektromotor
- 14: Steuer-/Regelstufe
- 16: Energieversorgung
- 18: unipolares Signal
- 22: pulsweitenmoduliertes Signal
- 24: zeitlicher Mittelwert
- 26: Signalschwellwert
- 28: Bremse
- 30: Vorrichtung
- 32: Mittel
- 34: Gerätegehäuse
- 36: Treiberstufe
- 38: Signalgenerator

## Patentansprüche

1. Gerät (10) des persönlichen Bedarfs, wie Zahnbürste, Munddusche, Rasierer, Küchenmaschine, mit einem Gleichstrommotor (12) und mit einer Steuer-/Regelstufe (14) zur Energieversorgung (16) des Gleichstrommotors (12), wobei die Steuer-/Regelstufe (14) während Stillstandszeiten des Gleichstrommotors diesen mit einer solchen, insbesondere hinsichtlich Zeitdauer und/oder Amplitude angepaßten Energie versorgt, die der Gleichstrommotor im Stillstand als elektro-akustischer Wandler zumindest teilweise in Form akustischer Signale abgibt, **dadurch gekennzeichnet, daß** die Steuer-/Regelstufe (14) dem Gleichstrommotor während dessen Stillstandszeiten unipolare Signale (18, 22) zuführt und daß der zeitliche Mittelwert (24) des Signals (18, 20, 22) unterhalb eines Signalschwellenwertes (26) liegt, der zu einem Anlaufen des Gleichstrommotors (12) führt.

2. Gerät (10) nach Anspruch 1, **dadurch gekennzeichnet, daß** der Gleichstrommotor (12) als Kleinleistungsmotor mit Rotor und Stator ausgebildet ist.

3. Gerät (10) nach einem der vorhergehenden Ansprüche, **dadurch gekennzeichnet, daß** die Steuer-/Regelstufe (14) dem Gleichstrommotor (12) analoge Signale zuführt.

4. Gerät (10) nach Anspruch 3, **dadurch gekennzeichnet, daß** das analoge Signal, beispielsweise eine Spannungssignal, das Spektrum der vom Gleichstrommotor (12) abgegebenen akustischen Signale enthält.

5. Gerät (10) nach Anspruch 3 oder 4, **dadurch gekennzeichnet, daß** das analoge Signal Frequenzgemische, beispielsweise zur Erzeugung von akustischen Sprach- oder Musiksignalen, enthält.

6. Gerät (10) nach einem der vorhergehenden Ansprüche 1 oder 2, **dadurch gekennzeichnet, daß** die Steuer-/Regelstufe (14) dem Gleichstrommotor (12) digitale Signale zuführt.

7. Gerät (10) nach Anspruch 6, **dadurch gekennzeichnet, daß** die digitalen Signale pulsweitenmodulierte Signale (22) sind und insbesondere im wesentlichen konstante Maximalamplitude besitzen.

8. Gerät (10) nach Anspruch 6 oder 7, **dadurch gekennzeichnet, daß** die Grundfrequenz des digitalen Signals die Tonhöhe des akustischen Signals repräsentiert.

9. Gerät (10) nach einem der vorhergehenden Ansprüche, **dadurch gekennzeichnet, daß** der Signalschwellwert (26) in Abhängigkeit der Signalfrequenz variiert und insbesondere mit der Frequenz ansteigt.

10. Gerät (10) nach einem der vorhergehenden Ansprüche, **dadurch gekennzeichnet, daß** das Signal (18, 20, 22) Frequenzen, die unterhalb eines Frequenzschwellwertes liegen, der zu einem Anlaufen des Gleichstrommotors (12) führt, nicht aufweist.

11. Gerät (10) nach einem der vorhergehenden Ansprüche, **dadurch gekennzeichnet, daß** zwischen der Abschaltung des Gleichstrommotors (12) als Antriebsmittel und dem Betrieb des Gleichstrommotors (12) als elektro-akustischer Wandler eine Zeitverzögerung vorgesehen ist.

12. Gerät (10) nach einem der vorhergehenden Ansprüche, **dadurch gekennzeichnet, daß** der Gleichstrommotor (12) eine Bremse (28), beispielsweise eine mechanische Bremse mit konstantem Bremsmoment oder eine Anlaufbremse mit nach Anlauf des Motors abfallendem Bremsmoment, besitzt,

13. Gerät (10) nach einem der vorhergehenden Ansprüche, **dadurch gekennzeichnet, daß** der Gleichstrommotor (12) eine Vorrichtung (30) zur Positionierung des Rotors im Stillstand in einer definierten Ruhelage aufweist.

14. Gerät (10) nach einem der vorhergehenden Ansprüche, **dadurch gekennzeichnet, daß** der Gleichstrommotor (12) zur Optimierung des Wirkungsgrades im Hinblick auf die abgegebene Schall-Leistung ein angepaßtes Motorgehäuse oder Motorgehäusematerial aufweist.

15. Gerät (10) nach einem der vorhergehenden Ansprüche, **dadurch gekennzeichnet, daß** zwischen Gerät (10) bzw. Gerätegehäuse (34) und Gleichstrommotor (12) durch Rippen, Hartteile oder dergleichen mechanische Mittel (32) für eine Optimierung der akustischen Abstrahlung des Gerätes (10) bzw. Gerätegehäuses (34) gesorgt ist.

16. Gerät (10) nach einem der vorhergehenden Ansprüche, **dadurch gekennzeichnet, daß** die Steuer-/Regelstufe (14) durch eine Treiberstufe (36) gebildet ist, die einerseits mit der Energieversorgung (16) und andererseits mit einem Signalgenerator (38) sowie gegebenenfalls zusätzlichen Elektronikteilen verbunden ist.

17. Gerät (10) nach einem der vorhergehenden Ansprüche, **dadurch gekennzeichnet, daß** es als Zahnbürste, Munddusche, Rasierer, Haushaltsmaschine oder dergleichen ausgebildet ist.

## Claims

1. An appliance (10) of personal use such as a toothbrush, an oral irrigator, a shaver, a kitchen machine, with a direct-current motor (12) and with a control stage (14) for the energy supply (16) to the direct-current motor (12), said control stage (14) supplying, during off-periods of the direct-current motor, the said motor with an energy which is adapted in particular in terms of duration and/or amplitude and which the direct-current motor (12) when off and in its capacity as an electroacoustic transducer, emits at least in part in the form of audible signals, **characterized in that** the control stage (14) feeds unipolar signals (18, 22) to the direct-current motor during its off-periods, and that the time average (24) of the signal (18, 20, 22) lies below a signal threshold value (26) that causes the direct-current motor (12) to start up.

2. The appliance (10) as claimed in claim 1, **characterized in that** the direct-current motor (12) is constructed as a low-duty motor comprising a rotor and a stator.

3. The appliance (10) as claimed in claim any one of the preceding claims, **characterized in that** the control stage (14) feeds analog signals to the direct-current motor (12).

4. The appliance (10) as claimed in claim 3, **characterized in that** the analog signal, for example a voltage signal, contains the spectrum of the audible signals emitted by the direct-current motor (12).

5. The appliance (10) as claimed in claim 3 or 4, **characterized in that** the analog signal contains frequency mixes, for example to generate audible speech or music signals.

6. The appliance (10) as claimed in any one of the preceding claims 1 or 2, **characterized in that** the control stage (14) feeds digital signals to the direct-current motor (12).

7. The appliance (10) as claimed in claim 6, **characterized in that** the digital signals are pulse-duration-modulated signals (22) and have in particular an essentially constant maximum amplitude.

8. The appliance (10) as claimed in claim 6 or 7, **characterized in that** the fundamental frequency of the digital signal represents the pitch of the audible signal.

9. The appliance (10) as claimed in any one of the preceding claims, **characterized in that** the signal threshold value (26) varies in response to the signal frequency and in particular rises with the frequency.

10. The appliance (10) as claimed in any one of the preceding claims, **characterized in that** the signal (18, 20, 22) has no frequencies below and a frequency threshold value that causes the direct-current motor (12) to start up.

11. The appliance (10) as claimed in any one of the preceding claims, **characterized in that** provision is made for a time delay between the instant the direct-current motor (12) is shut off as a driving mechanism and the instant the direct-current motor (12) is operated as an electroacoustic transducer.

12. The appliance (10) as claimed in any one of the preceding claims, **characterized in that** the direct-current motor (12) has a brake (28), for example a mechanical brake with a constant braking torque, or a start-up brake with a braking torque that decreases after the motor starts up.

13. The appliance (10) as claimed in any one of the preceding claims, **characterized in that** the direct-current motor (12) has a device (30) for positioning the rotor in a defined position when off.

14. The appliance (10) as claimed in any one of the preceding claims, **characterized in that** for optimization of the efficiency in terms of acoustic power output, the direct-current motor (12) is equipped with an accordingly adapted motor housing or motor housing material.

15. The appliance (10) as claimed in any one of the preceding claims, **characterized in that** provision is made for ribs, hard parts or similar mechanical elements (32) between the appliance (10) or appliance housing (34) and the direct-current motor (12) to optimize the acoustic emission of the appliance (10) or appliance housing (34).

16. The appliance (10) as claimed in any one of the preceding claims, **characterized in that** the control stage (14) is formed by a driving stage (36) that is connected to the energy supply (16) on the one side and to a signal generator (38) on the other side and, where applicable, to additional electronic components.

17. The appliance (10) as claimed in any one of the preceding claims, **characterized in that** it is constructed as a toothbrush, an oral irrigator, a shaver, a household machine or the like.

## Revendications

1. Appareil (10) pour usage personnel, tel que brosse à dents, douche buccale, rasoir, appareil de cuisine, comprenant un moteur à courant continu (12) et un étage de commande/réglage (14) destiné à l'alimentation en énergie (16) du moteur à courant continu (12), l'étage de commande/réglage (14) alimentant le moteur à courant continu, pendant les temps d'arrêt de celui-ci, avec une énergie adaptée, en particulier en termes de durée et/ou d'amplitude, telle que le moteur à courant continu fonctionnant en convertisseur électro-acoustique émet, à l'arrêt, des signaux sous forme acoustique, au moins partiellement, **caractérisé en ce que** l'étage de commande/réglage (14) transmet des signaux unipolaires (18, 22) au moteur à courant continu, pendant ses temps d'arrêt, et **en ce que** la moyenne de temps (24) du signal (18, 20, 22) se situe en dessous d'une valeur de seuil de signal (26) conduisant à un démarrage du moteur à courant continu (12).

2. Appareil (10) suivant la revendication 1, **caractérisé en ce que** le moteur à courant continu (12) prend la forme d'un appareil de faible puissance avec un rotor et un stator.

3. Appareil (10) suivant l'une des revendications qui précèdent, **caractérisé en ce que** l'étage de commande/réglage (14) achemine des signaux analogiques au moteur à courant continu (12).

4. Appareil (10) suivant la revendication 3, **caractérisé en ce que** le signal analogique, par exemple un signal de tension, contient le spectre des signaux acoustiques émis par le moteur à courant continu (12).

5. Appareil (10) suivant la revendication 3 ou 4, **caractérisé en ce que** le signal analogique contient des mélanges de fréquences, par exemple destinés à générer des signaux vocaux ou musicaux acoustiques.

6. Appareil (10) suivant l'une des revendications précédentes 1 ou 2, **caractérisé en ce que** l'étage de commande/réglage (14) achemine des signaux numériques au moteur à courant continu (12).

7. Appareil (10) suivant la revendication 6, **caractérisé en ce que** les signaux numériques sont des signaux modulés en largeur (22) et présentent en particulier une amplitude maximale pour ainsi dire constante.

8. Appareil (10) suivant la revendication 6 ou 7, **caractérisé en ce que** la fréquence fondamentale du signal numérique représente la hauteur du son du signal acoustique.

9. Appareil (10) suivant l'une des revendications qui précèdent, **caractérisé en ce que** la valeur de seuil du signal (26) varie en fonction de la fréquence du signal et augmente en particulier avec la fréquence.

10. Appareil (10) suivant l'une des revendications qui précèdent, **caractérisé en ce que** le signal (18, 20, 22) ne présente pas de fréquences qui se situent en dessous d'une valeur de seuil de fréquence engendrant un démarrage du moteur à courant continu (12).

11. Appareil (10) suivant l'une des revendications qui précèdent, **caractérisé en ce qu'**entre la déconnexion du moteur à courant continu (12) fonctionnant comme moyen d'entraînement, et le fonctionnement du moteur à courant continu (12) en convertisseur électro-acoustique, on a prévu un retard.

12. Appareil (10) suivant l'une des revendications qui précèdent, **caractérisé en ce que** le moteur à courant continu (12) comporte un frein (28), par exemple un frein mécanique avec moment de freinage constant, ou un frein de démarrage avec moment de freinage décroissant après le démarrage du moteur.

13. Appareil (10) suivant l'une des revendications qui précèdent, **caractérisé en ce que** le moteur à courant continu (12) présente un dispositif (30) pour le positionnement du moteur à l'arrêt dans une position de repos définie.

14. Appareil (10) suivant l'une des revendications qui précèdent, **caractérisé en ce que** le moteur à courant continu (12) présente un carter ou un matériau de carter adapté en vue d'optimiser le rendement en termes de puissance sonore débitée.

15. Appareil (10) suivant l'une des revendications qui précèdent, **caractérisé en ce qu'**entre l'appareil (10) ou le carter (34) de l'appareil et le moteur à courant continu (12), on assure une optimisation du rayonnement acoustique de l'appareil (10) ou du carter (34) de l'appareil, par des cannelures, parties dures ou moyens mécaniques similaires (32).

16. Appareil (10) suivant l'une des revendications qui précèdent, **caractérisé en ce que** l'étage de commande/réglage (14) est matérialisé par un étage excitateur (36) qui est relié d'une part à l'alimentation en énergie (16), et de l'autre, à un générateur de signaux (38) et le cas échéant à des éléments électroniques supplémentaires.

17. Appareil (10) suivant l'une des revendications qui précèdent, **caractérisé en ce qu'**il prend la forme de brosse à dents, douche buccale, rasoir, appareil électroménager ou similaire.
